# EUROPÄISCHE PATENTSCHRIFT

(11) **EP 3 877 480 B1**
(45) Veröffentlichungstag und Bekanntmachung des Hinweises auf die Patenterteilung: **21.05.2025**
(21) Anmeldenummer: 19797231.8
(22) Anmeldetag: 29.10.2019
(51) Int. Cl.: C09J 183/04, C08L 71/02, C08L 101/10

(54) **FEUCHTIGKEITSHÄRTBARE EINKOMPONENTENMASSE UND VERFAHREN ZUM FÜGEN, VERGIESSEN UND BESCHICHTEN UNTER VERWENDUNG DER MASSE**
MOISTURE-CURABLE SINGLE-COMPONENT COMPOUND, AND METHOD FOR JOINING, CASTING AND COATING USING SAID COMPOUND
MATIÈRE À UN COMPOSANT DURCISSABLE À L'HUMIDITÉ ET PROCÉDÉ D'ASSEMBLAGE, DE SCELLEMENT ET DE REVÊTEMENT AU MOYEN DE CETTE MATIÈRE

(30) Priorität: 08.11.2018 DE 102018127854
(43) Veröffentlichungstag der Anmeldung: 15.09.2021
(73) Patentinhaber: DELO Industrie Klebstoffe GmbH & Co. KGaA, 86949 Windach (DE)
(72) Erfinder: TRUE, Markus, 86949 Windach (DE); EHRET, Markus, 86949 Windach (DE); SÜVEGES, Bastian, 86949 Windach (DE)
(74) Vertreter: Prinz & Partner mbB
(86) Internationale Anmeldenummer: PCT/EP2019/079472
(87) Internationale Veröffentlichungsnummer: WO 2020/094453

(56) Entgegenhaltungen:
- EP-A2- 2 207 851
- EP-B1- 2 207 851
- EP-B1- 2 344 107
- WO-A1-2004/104113
- WO-A1-2018/119067
- DE-A1- 102007 017 842
- DE-A1- 102015 222 028
- DE-A1- 102016 111 590
- US-A1- 2008 152 926
- US-A1- 2012 088 188

## Beschreibung

### GEBIET DER ERFINDUNG

Die vorliegende Erfindung betrifft strahlungsaktiviert durch Feuchtigkeit härtbare Einkomponentenmassen sowie deren Verwendung beim Verkleben, Abformen, Abdichten und Beschichten von Substraten.

Darüber hinaus betrifft die Erfindung ein Verfahren zum Fügen, Beschichten, Abformen oder Vergießen von Substraten unter Verwendung der Masse.

### TECHNISCHER HINTERGRUND

Einkomponentige, durch aktinische Strahlung und Feuchtigkeit vernetzbare Massen sind aus der EP 2 545 133 B1 bekannt. Diese enthalten neben feuchtigkeitshärtbaren Verbindungen auf Basis von Silanen zusätzlich radikalisch strahlungshärtbare Verbindungen und eignen sich besonders für das Verfüllen von elektrooptischen Bauteilen.

Durch Feuchtigkeit härtbare Einkomponentenmassen auf Basis von Silanen, deren Feuchtigkeitshärtung durch Bestrahlung oder Wärme induziert werden kann, sind beispielsweise aus der DE 10 2016 111 590 A1 bekannt. Die Massen auf Basis von Silanen enthalten einen photolatenten und/oder wärmelatenten Säurebildner. Nach der Aktivierung des Säurebildners bleiben die Massen ohne den Zutritt von zusätzlicher Feuchtigkeit über einen Zeitraum von mindestens 24 Stunden flüssig. Beim Einsatz benötigen die Massen trotz schneller Anfangsfestigkeiten bis zur vollständigen Durchhärtung, insbesondere bei höheren Schichtdicken, längere Zeiten, da der Zutritt von Feuchtigkeit diffusionskontrolliert stattfindet.

Die US 3 979 344 A und die EP 1 591 464 A1 beschreiben die Katalyse der Silanvernetzung mit Hilfe metallhaltiger Katalysatoren wie Dibutylzinnlaurat (DBTL) oder Aminosilanen. Diese Verbindungen katalysieren zwar die Silanvernetzung, dennoch bleibt der Wassergehalt für die Vernetzungsreaktion der limitierende Faktor. Insbesondere bei hohen Schichtdicken oder Bauteilgeometrien, die zusätzlich den Zutritt von Feuchtigkeit erschweren, können mehrere Tage bis Wochen bis zur vollständigen Durchhärtung der silanhaltigen Massen vergehen. Ferner ist der Einsatz von metallhaltigen Katalysatoren auf Basis von Zinn unter ökologischen Gesichtspunkten bedenklich.

Ein Ansatz, um ein feuchtevernetzendes Polymersystem mit einem Wasserspendersystem auszustatten, ist aus der DE 10 2011 002 440 A1 bekannt. Wasser wird dabei aus der Reaktion eines zyklischen Carbonsäureanhydrids mit einem primären Amin unter erhöhten Temperaturen freigesetzt. Die Offenlegung sieht jedoch vor, dass die Zusammensetzung bei Temperaturen weit über 100 °C thermoplastisch verarbeitet wird.

Die EP 2 170 986 B1 beschreibt ein Verfahren zur Freisetzung von Wasser für feuchtevernetzende Polyolefine durch ringschließende Dehydratisierungsreaktionen. Als Wasserspender kommen beispielsweise Aminosäuren oder Dicarbonsäuren zum Einsatz, die unter Ringschlussbedingungen Wasser freisetzen. Nachteilig bei diesem Ansatz ist, dass zwingend ein metallhaltiger Katalysator benötigt wird.

Die WO 2009 058 545 A2 offenbart eine Masse und ein Verfahren zur in-situ Generierung von Wasser aus vicinalen Diolen durch eine Eliminierungsreaktion. Die Massen enthalten wahlweise eine Säure, um die Freisetzung von Wasser zusätzlich zu katalysieren. Auch hier sind wiederum erhöhte Temperaturen und eine Schmelzverarbeitung der Masse vorgesehen.

Die US 2012 / 088188 A1 beschreibt eine Verfahren zur Bildung eines Musters, bei dem eine Säure, die durch Bestrahlung eines Teils einer lichtempfindlichen Schicht gebildet wird, in eine Unterschicht diffundiert, die ein säureempfindliches Copolymer mit säurezersetzbaren Gruppen und Bindungsgruppen umfasst, die kovalent an die Oberfläche des Substrats gebunden sind und/oder eine Interpolymervernetzung bilden. Die Diffusion umfasst das Erhitzen der Unterschicht und der lichtempfindlichen Schicht. Die säureempfindliche Gruppe reagiert mit der diffundierten Säure und bildet einen polaren Bereich auf der Unterschicht, der die Form des Musters hat. Die lichtempfindliche Schicht wird entfernt, wobei eine selbstorganisierende Schicht entsteht, die ein Blockcopolymer mit einem ersten Block mit einer Affinität für den polaren Bereich und einem zweiten Block mit einer geringeren Affinität für den polaren Bereich umfasst. Der erste Block bildet eine Domäne, die auf die polare Region ausgerichtet ist, und der zweite Block bildet eine andere Domäne, die auf die erste ausgerichtet ist. Durch die Entfernung einer der beiden Domänen wird ein Teil der Unterschicht freigelegt.

Die EP 2 207 851 A2 offenbart eine Polymerzusammensetzung umfassend ein Silan-funktionalisiertes Polymer, z. B. ein mit Vinyltriethoxysilan versehenes Polyethylen, einen polyfunktionellen Alkohol und gegebenenfalls eine Säure, z. B. eine alkylierte Aryldisulfonsäure. Die Verwendung polyfunktioneller Alkohole in Abwesenheit einer starken Säure führt zu einer Lichtvernetzung des silanfunktionalisierten Polymers, was wiederum zu einer Polymerschmelze mit verbesserten Dehnungseigenschaften wie Dehnungsviskosität und Schmelzfestigkeit führt. Die Verwendung eines polyfunktionellen Alkohols in Kombination mit einer blockierten starken Säure sorgt für eine langsame Vernetzungsrate während der Schmelzverarbeitung und einen hohen Grad an endgültiger Vernetzung, nachdem die Polymerzusammensetzung geformt oder gegossen wurde.

Die DE 10 2015 222 028 A1 offenbart kationisch polymerisierbare Polyacrylate enthaltend Alkoxysilangruppen und deren Verwendung.

Aus der EP 2 344 107 B1 ist eine dentale Zusammensetzung mit fluoreszierendem Pigment bekannt.

In der WO 2018 / 119 067 A1 ist eine Photopolymer-Keramik-Dispersion für die additive Fertigung offenbart.

Die WO 2004 / 104 113 A1 betrifft ein Verfahren zur Herstellung von nanostrukturierten und/oder nanoporösen Oberflächen, Beschichtungen mit einer nanostrukturierten und/oder nanoporösen Oberfläche und Gegenstände, die diese Beschichtungen enthalten.

Zudem wird in der US 2008 / 0 152 926 A1 ein leitfähiger Gegenstand und ein Verfahren zur Herstellung desselben bereitgestellt, wobei der leitfähige Gegenstand ein Substrat, einen leitfähigen Verbundwerkstoff mit einem leitfähigen Material in einer Matrix, die ein oder mehrere filmbildende Harze mit mindestens einer polymerisationsfähigen funktionellen Gruppe enthält, einen oder mehrere Haftvermittler und eine oder mehrere Verbindungen, die mit dem filmbildenden Harz reaktiv sind und die auch mindestens eine saure Komponente enthalten, umfasst.

Ferner wird in der DE 10 2007 017 842 A1 eine Vorrichtung zum Aktivieren einer polymerisierbaren Masse beschrieben.

Nachteilig an allen beschriebenen Ansätzen ist, dass als Signal zur Wasserfreisetzung Wärme benötigt wird. Die Temperaturen sind dabei so hoch, dass empfindliche Bauteile auch bereits bei kurzem Kontakt mit der Masse beschädigt werden können. Die meisten der beschriebenen Methoden zur Freisetzung von Wasser setzen eine Verarbeitung der härtbaren Masse unter Spritzguss-Bedingungen voraus. Die dafür nötigen hohen Mengen an Energie sind ferner aus ökologischen Gesichtspunkten von Nachteil.

### Zusammenfassung der Erfindung

Der Erfindung liegt die Aufgabe zugrunde, die Nachteile der aus dem Stand der Technik bekannten Zusammensetzungen zu vermeiden und strahlungsaktiviert durch Feuchtigkeit härtbare, lagerstabile Einkomponentenmassen auf Basis von feuchtigkeitshärtbaren Verbindungen bereit zu stellen, die bei der Härtung Wasser freisetzen und so innerhalb kurzer Zeit auch in hohen Schichtdicken sicher aushärten. Die Aushärtungsgeschwindigkeit der Massen ist dabei weitestgehend unabhängig von externem Zutritt von Feuchtigkeit.

Bevorzugt soll die Freisetzung von Wasser unter milden Bedingungen ohne einen übermäßigen Eintrag von Wärme erfolgen.

Diese Aufgaben werden erfindungsgemäß durch eine einkomponentige feuchtigkeitshärtbare Masse gemäß Anspruch 1 gelöst.

Vorteilhafte Ausführungsformen der erfindungsgemäßen Massen sind in den Unteransprüchen angegeben, die wahlweise miteinander kombiniert werden können.

Gegenstand der Erfindung ist ferner die Verwendung der erfindungsgemäßen Massen als Klebstoff oder Dichtstoff für das Verkleben, Vergießen, Abformen, Abdichten und Beschichten von Substraten.

Die Erfindung betrifft ferner ein Verfahren zum Verkleben, Vergießen, Abformen, Abdichten und Beschichten von Substraten unter Verwendung der erfindungsgemäßen Massen. Insbesondere lassen sich die Massen dabei in einer Durchflussapparatur durch Bestrahlung aktivieren.

Die erfindungsgemäße Masse umfasst (A) eine oder mehrere feuchtigkeitshärtbare Verbindungen, ausgewählt aus der Gruppe der Alkoxysilane, wobei das Alkoxysilan der Komponente (A) mindestens difunktionell in Bezug auf Alkoxysilangruppen ist, (B) mindestens einen Säurebildner, der unter Einwirkung von aktinischer Strahlung eine Säure freisetzt, und (C) mindestens eine Carbonylverbindung oder ein Carbonylderivat, ausgewählt aus der Gruppe der Aldehyde, Ketone, Halbacetale und/oder Halbketale.

Darüber hinaus können die erfindungsgemäßen Massen zusätzlich einen Alkohol und/oder ein Thiol (D), einen Katalysator für die Feuchtigkeitshärtung (E), eine strahlungshärtbare Verbindung (F), einen Photoinitiator für die radikalische Polymerisation (G) und weitere Zusatzstoffe (H) enthalten.

### BESCHREIBUNG BEVORZUGTER AUSFÜHRUNGSFORMEN

Die Erfindung wird im Folgenden anhand von bevorzugten Ausführungsformen ausführlich und beispielhaft beschrieben, die jedoch nicht in einem einschränkenden Sinn verstanden werden sollen.

"Einkomponentig" oder "Einkomponentenmasse" bedeutet im Sinne der Erfindung, dass die genannten Komponenten der Masse zusammen vorliegen.

"Flüssig" bedeutet im Sinne der Erfindung, dass bei 23 °C der durch Viskositätsmessung bestimmte Verlustmodul G" größer als der Speichermodul G' der betreffenden Masse ist.

Die Massen gelten als verarbeitbar, wenn sich die Viskosität der jeweiligen Masse während einer Lagerung bei Raumtemperatur über einen Zeitraum von 7 Tagen um weniger als 100%, bevorzugt um weniger als 50% ändert.

Soweit der unbestimmte Artikel "ein" oder "eine" verwendet wird, ist damit auch die Pluralform "ein oder mehrere" umfasst, soweit diese nicht ausdrücklich ausgeschlossen wird.

"Mindestens difunktionell" bedeutet, dass pro Molekül zwei oder mehr Einheiten der jeweils genannten funktionellen Gruppe enthalten sind.

Alle im Folgenden aufgeführten Gewichtsanteile beziehen sich, wenn nicht anders angegeben, jeweils auf das Gesamtgewicht der Masse aus den Komponenten (A) bis (H).

Die erfindungsgemäßen Massen sind bei Raumtemperatur flüssig und strahlungsaktiviert durch Feuchtigkeit härtbar, ohne dass externe Feuchtigkeit zutreten muss. Die Massen lassen sich durch Bestrahlen mit aktinischer Strahlung derart aktivieren, dass in der Masse selbst eine zur Feuchtigkeitshärtung ausreichende Menge an Wasser freigesetzt wird. Die Freisetzung von Wasser erfolgt dabei ausschließlich in Bereichen, die der Bestrahlung zugänglich sind.

In einer ersten bevorzugten Ausführungsform umfassen die Massen mindestens eine feuchtigkeitshärtbare Verbindung (A) auf Basis einer mindestens difunktionellen Alkoxysilanverbindung (A1). Daneben enthalten die Massen mindestens eine photolatente Säure (B), mindestens eine Carbonylverbindung oder ein Carbonylderivat (C) ausgewählt aus der Gruppe der Aldehyde, Ketone, Halbacetale und/oder Halbketale und wahlweise mindestens einen Alkohol und/oder ein Thiol (D). Die Masse der ersten bevorzugten Ausführungsform enthält keine weiteren für die Feuchtigkeitshärtung von Alkoxysilanen üblichen Katalysatoren, wie beispielsweise Aminosilane, Zinnverbindungen oder organische Säuren.

In einer zweiten bevorzugten Ausführungsform umfassen die Massen neben den Komponenten der ersten Ausführungsform zusätzlich mindestens einen Katalysator (E) für die Feuchtigkeitshärtung der Alkoxysilane, sodass die Masse auch in Bereichen sicher aushärtet, die nicht mit aktinischer Strahlung bestrahlt werden können, zu denen aber externe Feuchtigkeit zutreten kann.

In einer dritten bevorzugten Ausführungsform umfassen die Massen neben den Komponenten der ersten und/oder zweiten Ausführungsform zusätzlich mindestens eine radikalisch härtbare Verbindung (F) auf Basis von (Meth)acrylaten und einen radikalischen Photoinitiator (G).

In allen genannten Ausführungsformen können die Massen zusätzlich weitere Zusatzstoffe (H) enthalten, die dem Fachmann für die Anwendung in feuchtigkeitshärtbaren Massen geläufig sind.

Die Komponenten der erfindungsgemäßen Massen sind nachfolgend im Einzelnen beschrieben. Die jeweiligen Komponenten können sowohl untereinander als auch miteinander in jeder technisch sinnvollen Weise im Sinne der Erfindung kombiniert werden.

### Komponente (A): Feuchtigkeitshärtbare Verbindungen

### (A1): Difunktionelle Alkoxysilanverbindung

Die feuchtigkeitshärtbare Verbindung der Komponente (A) umfasst eine oder mehrere mindestens difunktionelle Alkoxysilanverbindungen (A1).

Die mindestens difunktionelle Alkoxysilanverbindung mit mindestens zwei Alkoxysilangruppen (A1) entspricht vorzugsweise der allgemeinen Formel (I): 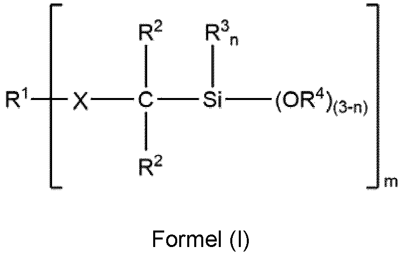 in der R¹ ein wenigstens zweibindiger organischer Rest ist,
jedes R² unabhängig ein aus der aus Wasserstoff, linearen, verzweigten, zyklischen, gesättigten, ungesättigten und aromatischen Kohlenwasserstoffen bestehenden Gruppe ausgewählter monovalenter Rest ist, der gegebenenfalls halogensubstituiert und/oder durch 1 bis 3 Heteroatome unterbrochen sein kann,
jedes R³ unabhängig ein monovalenter Rest ist, der aus der Gruppe der linearen, verzweigten, zyklischen, gesättigten, ungesättigten und aromatischen Kohlenwasserstoffe ausgewählt ist, und der gegebenenfalls halogensubstituiert oder durch 1 bis 3 Heteroatome unterbrochen sein kann,
jedes R⁴ unabhängig ein aus der aus Wasserstoff, linearen, verzweigten, zyklischen, gesättigten, ungesättigten und aromatischen Kohlenwasserstoffen bestehenden Gruppe ausgewählter monovalenter Rest ist, der wahlweise halogensubstituiert oder durch 1 bis 3 Heteroatome unterbrochen sein kann,
X ein heteroatomhaltiger zwei- oder dreibindiger Rest ist, der durch ein Heteroatom, insbesondere Sauerstoff, Stickstoff oder Schwefel, an die Gruppe -CR²₂-SiR³ₙ(OR⁴)₍₃₋ₙ₎ gebunden ist,
m mindestens 2, bevorzugt 2 bis 9, weiter bevorzugt 2 bis 4 ist; und
n = 0 bis 2 ist.

Bei den Verbindungen der allgemeinen Formel (I) handelt es sich um sogenannte α-(Alkoxy)silanverbindungen, die dadurch gekennzeichnet sind, dass die (Alkoxy)silangruppen in α-Position zu einem Heteroatom wie Sauerstoff, Schwefel oder Stickstoff enthalten sind. Dabei ist die Alkoxysilangruppe mittels einer substituierten oder unsubstituierten Methylengruppe von dem Heteroatom getrennt.

Gemäß einer bevorzugten Ausführungsform ist R¹ ein aus der aus (i) linearen oder verzweigten, gesättigten oder ungesättigten Alkylresten mit 1 bis 8 C-Atomen, gegebenenfalls unterbrochen durch 1 bis 3 Heteroatome, (ii) gesättigten oder ungesättigten Cycloalkylresten mit 3 bis 9 C-Atomen, gegebenenfalls unterbrochen durch 1 bis 3 Heteroatome, (iii) aromatischen Resten mit 5 bis 10 C-Atomen oder (iv) Polyolefinen, Polyethern, Polyamiden, Polyestern, Polycarbonaten, Polyurethanen, Polyharnstoffen, Polybutadienen, hydrierten Polybutadienen, Polysiloxanen oder Polyacrylaten bestehenden Gruppen ausgewählter Rest, wobei R¹ jeweils unsubstituiert sein oder weitere Substituenten tragen kann.

Weiter bevorzugt ist R¹ ein polymerer Rest der vorgenannten Gruppe (iv), vorzugsweise mit terminalen Alkoxysilangruppen gemäß Formel (I).

Der Rest R¹ steht besonders bevorzugt für ein Polymergrundgerüst oder Copolymergerüst auf Basis eines Polyethers, Polyesters, Polycarbonats, Polyurethans, Polyamids oder Polyharnstoffs, und weiter bevorzugt für einen Polyurethan- oder Polyetherrest.

Der heteroatomhaltige Rest X bedeutet vorzugsweise einen heteroatomhaltigen zweibindigen Rest, wie beispielsweise -O-, -S-, -N(R)-, -C(O)-O-, -O-C(O)-O-, -O-C(O)-O-N(R)-, -N(R)-C(O)-O-, -S(O)-, -S(O)₂-, -S(O)-O-, -S(O)₂-O-, -O-S(O)₂-O-, -C(O)-N(R)-, -S(O)₂-N(R)-, -S(O)₂-N[C(O)R]-, -O-S(O)₂-N(R)-, -N(R)-S(O)₂-O-, -P(O)(OR)-O-, -O-P(O)(OR)-, -O-P(O)(OR)-O-, -P(O)(OR)-N(R)-, -N(R)-P(O)(OR)-, -O-P(O)(OR)-N(R)-, -N(R)-P(O)(OR)-O-, -N[C(O)R]-, -N=C(R)-O-, -C(R)=N-O-, -C(O)-N[C(O)R]-, -N[S(O)₂R']-, -C(O)-N[S(O)₂R']- oder -N[P(O)R"₂]-, wobei R für Wasserstoff oder gegebenenfalls substituierte C₁-C₂₀-Alkyl- oder C₆-C₂₀-Arylreste steht, R' für einen gegebenenfalls substituierten C₁-C₂₀-Alkyl- oder C₆-C₂₀-Arylrest steht, und R" für einen gegebenenfalls substituierten C₁-C₂₀-Alkyl, C₆-C₂₀-Aryl-, C₁-C₂₀-Alkoxy- oder C₆-C₂₀-Aryloxyrest steht.

Besonders bevorzugt steht X in der allgemeinen Formel (I) für ein Sauerstoff- oder Stickstoffatom oder eine Carboxy-, Carbamat-, Carbonat-, Ureido-, Urethan- oder Sulfonatbindung.

R² bedeutet vorzugsweise Wasserstoff. R³ ist vorzugweise C₁-C₆-Alkyl, insbesondere Methyl oder Ethyl, oder Phenyl.

Der Rest R⁴ in der allgemeinen Formel (I) bedeutet vorzugsweise eine Methyl- oder Ethylgruppe. Bevorzugt ist n = 0 oder 1. Weiterhin können zwei Reste R⁴ zu einem Zyklus verbrückt sein.

Gemäß einer weiteren bevorzugten Ausführungsform ist der Rest R² Wasserstoff, R³ und R⁴ bedeuten Methylgruppen und n = 1.

Bevorzugt weisen die mindestens difunktionellen α-Alkoxysilanverbindungen ein mittleres Molekulargewicht von 2.000 bis 50.000 g/mol, ganz besonders bevorzugt etwa 10.000 bis 20.000 g/mol auf.

Die Herstellung von α-alkoxysilanterminierten Verbindungen ist u.a. in der WO 03/014226 A1 ausführlich beschrieben. Daneben sind viele der bevorzugten α-Silane auf Basis von Polyethern oder Polyurethanen kommerziell von der Firma Wacker Chemie AG verfügbar. Diese werden unter der Markenbezeichnung GENIOSIL STP-E kommerziell vertrieben. Beispielhaft seien die Typen STP-E10, STP-E30 angeführt.

In einer weiteren Ausführungsform kann die Komponente (A1), wahlweise zusätzlich zur oder anstelle der mindestens zwei α-Alkoxysilangruppen aufweisenden Silanverbindung der Formel (I), auch eine oder mehrere mindestens difunktionelle Alkoxysilanverbindungen der allgemeinen Formel (II) umfassen: 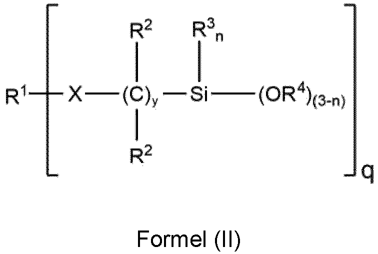
worin R¹, R², R³ und R⁴ die oben für Formel (I) angegebenen Bedeutungen besitzen;
X ein heteroatomhaltiger zwei- oder dreibindiger Rest ist, der durch ein Heteroatom, insbesondere Sauerstoff, Stickstoff oder Schwefel, an die Gruppe -(CR²₂)_{y}-SiR³ₙ(OR⁴)₍₃₋ₙ₎ gebunden ist,
n = 0 bis 2 ist,
q mindestens 2, bevorzugt 2 bis 9, weiter bevorzugt 2 bis 4 ist; und
y eine Zahl von 2 bis 6 bedeutet.

In den bevorzugten Verbindungen der allgemeinen Formel (II) ist y = 3. Bei diesen Verbindungen handelt es sich um sogenannte γ-Alkoxysilane, bei denen das Heteroatom des Restes X durch eine wahlweise substituierte Propyleneinheit von dem Siliziumatom der Alkoxysilangruppe getrennt ist.

Die Herstellung von γ-Alkoxysilanen wird beispielsweise in der US 5 364 955 A und den darin genannten Schriften ausführlich beschrieben. Kommerziell sind γ-Alkoxysilane der allgemeinen Formel (II) mit mindestens zwei alkoxysilanhaltigen Endgruppen von der Firma Wacker Chemie AG erhältlich. Derartige γ-silanterminierte Polyether sind unter den Bezeichnungen Geniosil STP-E15 und STP-E35 verfügbar.

Die Komponente (A1) kann aus einer oder mehreren Verbindungen der allgemeinen Formeln (I) und/oder (II) zusammengesetzt sein.

### Komponente (A2): Monofunktionelle Silanverbindung

Neben der Komponente (A1) können die erfindungsgemäßen Massen zusätzlich mindestens eine monofunktionelle Silanverbindung (A2) enthalten, die nur eine Alkoxysilangruppe aufweist, und/oder Derivate davon. Insbesondere kann die Komponente (A2) teilkondensierte oder verbrückte, insbesondere zyklisch verbrückte, Derivate der monofunktionellen Silanverbindung umfassen, die durch teilweise Hydrolyse der Alkoxysilangruppen oder durch Umsetzung der Alkoxysilangruppen mit zweiwertigen Alkoholen erhältlich sind.

Die Komponente (A2) umfasst bevorzugt Verbindungen der allgemeinen Formel (III): 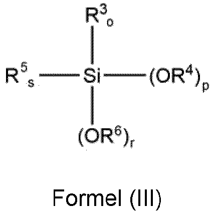
worin R³ und R⁴ die oben im Zusammenhang mit Formel (I) angegebenen Bedeutungen besitzen;
R⁵ unabhängig ein monovalenter organischer Rest ist, der aus der Gruppe der linearen, verzweigten, zyklischen, gesättigten, ungesättigten und aromatischen Kohlenwasserstoffe ausgewählt ist, und wahlweise durch Heteroatome substituiert und oder durch Heteroatome unterbrochen sein kann und von R³ verschieden ist;
R⁶ ein Si-Rest ist, an den weitere Reste gemäß Formel (III) verknüpft sein können,
o eine ganze Zahl von 0 bis 3 ist,
p eine ganze Zahl von 1 bis 3 ist,
s eine ganze Zahl von 0 bis 3 und
r eine ganze Zahl von 0 bis 2 ist,
wobei die Summe aus o + p + r + s = 4 ist.

Bevorzugt ist o gleich 0 oder 1, p ist 2 oder 3, s ist 1 und r ist 0 oder 1.

Mit umfasst sind auch teilkondensierte oder verbrückte Silanverbindungen der Formel (III).

Die monofunktionelle Silanverbindung der Komponente (A2) schützt die erfindungsgemäßen Massen während Herstellung und Lagerung vor eindringender Feuchtigkeit und trägt bei der Aushärtung der Massen zusätzlich zum Haftungsaufbau bei.

Neben klassischen Alkoxyvinylsilanen können als Komponente (A2) verschiedene monofunktionelle, vorzugsweise monomere, α- oder γ-Alkoxysilane zum Einsatz kommen.

Bevorzugte Beispiele aus der Gruppe der α-Silane umfassen (Methacryloxymethyl)methyldimethoxysilan, Methacryloxymethyltrimethoxysilan, N-Trimethoxysilylmethyl-O-methylcarbamat und N-Dimethoxy(methyl)silyl-methyl-O-methylcarbamat.

Als Beispiele für kommerziell verfügbare monofunktionelle α-Alkoxysilane seien Produkte der Firma Wacker Chemie AG genannt. Entsprechende methacrylat- oder carbamatfunktionalisierte α-Alkoxysilane sind unter den Bezeichnungen GENIOSIL XL 32, XL 33, XL 63 oder XL 65 erhältlich.

Teilkondensierte monofunktionelle Silane sind ebenfalls als Feuchtigkeitsfänger einsetzbar. Dazu werden monofunktionelle Silane wie z.B. Geniosil XL10 (VTMO) mit einer definierten Menge Wasser umgesetzt. Solche Produkte sind beispielsweise unter der Bezeichnung Dynasylan 6490 von der Firma Evonik Industries AG kommerziell erhältlich.

Alkoxysilane, welche mit difunktionellen Alkoholen wahlweise zyklisch überbrückt sind, können ebenfalls als Komponente (A2) eingesetzt werden. Solche Produkte sind unter der Bezeichnung Silquest Y-15866 von der Firma Momentive kommerziell erhältlich.

Bevorzugt ist darüber hinaus die Verwendung von Silanen als Komponente (A2), die eine Mehrfachfunktion als Feuchtigkeitsfänger und Haftvermittler erfüllen können.

Eine Kombination mehrerer verschiedener Silane gemäß der allgemeinen Formel (III) und ihrer teilkondensierten oder verbrückten Derivate ist ebenfalls im Sinne der Erfindung.

Die Verwendung von Silanen, die in Gegenwart von Feuchtigkeit als Vernetzungskatalysatoren wirken und damit die Aushärtung der Masse katalysieren, ist jedoch nicht bevorzugt. Zu dieser Gruppe zählen insbesondere Aminosilane, wie sie beispielsweise in der EP 1 421 129 A beschrieben werden. Exemplarisch seien γ-Aminopropyltrimethoxysilan oder N-Aminoethyl-3-aminopropyltrimethoxysilan angeführt. Bevorzugt ist die erfindungsgemäße Masse daher frei von Aminosilanen.

Neben den Verbindungen (A1) und (A2) können in der feuchtigkeitshärtbaren Komponente (A) auch Poly(organo)siloxane mit härtbaren Alkoxysilangruppen und/oder härtbaren Acetylgruppen (A3) zum Einsatz kommen. Diese sind in ihrer chemischen Struktur nicht weiter eingeschränkt und umfassen beispielsweise cyclische Polysiloxane, lineare Polysiloxane, vernetzte und verzweigte Polysiloxane.

In den Massen der vorliegenden Erfindung liegt die Komponente (A), bezogen auf das Gesamtgewicht der Masse aus den Komponenten (A) bis (H), bevorzugt in einem Bereich von 5 bis 99,5 Gew.-% vor, weiter bevorzugt von 10 bis 99 Gew.-% und besonders bevorzugt von 20 bis 98 Gew.-%.

### Komponente (B): Säurebildner

Neben den feuchtigkeitshärtbaren Verbindungen der Komponente (A) enthalten die erfindungsgemäßen Massen zusätzlich mindestens einen Säurebildner (B). Der Säurebildner umfasst dabei bevorzugt Verbindungen, die in der Lage sind, durch Einwirkung von aktinischer Strahlung eine starke Säure freizusetzen. Derartige Verbindungen werden im Folgenden auch als photolatente Säuren bezeichnet. Die freigesetzte Säure katalysiert die Hydrolyse und Vernetzung der in der Masse enthaltenen, durch Feuchtigkeit härtenden Gruppierungen. Daneben katalysiert die freigesetzte Säure ebenfalls die Bildung von Acetalen/Ketalen, Thioacetalen und/oder Thioketalen durch eine Umsetzung der Komponente (C) mit in der Formulierung enthaltenen und/oder aus den feuchtigkeitshärtbaren Verbindungen der Komponente (A) durch Hydrolyse freigesetzten Alkoholen oder Thiolen. Durch die Umsetzung der Komponente (C) zu Acetalen oder Ketalen wird in der Masse Wasser freigesetzt, welches wiederum zur Feuchtigkeitshärtung der Komponente (A) zu Verfügung steht. Auf diese Weise ist innerhalb kurzer Zeit eine Durchhärtung, auch von hohen Schichtdicken, möglich. Die Freisetzung von Wasser erfolgt dabei nur in Bereichen, die der Bestrahlung zugänglich sind.

Geeignete photolatente Säuren sind unter anderem aus kationisch polymerisierbaren Systemen bekannt. So können aromatische Arylsulfoniumsalze, wie in der WO 2003/072567 A1 oder der WO 2003/008404 A1 beschrieben, oder Aryliodoniumsalze, wie in der WO 1998/002493 A1 oder der US 6 306 555 A beschrieben, zum Einsatz kommen.

Als photolatente Säuren geeignete Oniumsalze werden darüber hinaus von J.V. Crivello und K. Dietliker in "Photoinitiators for Free Radical, Cationic & Anionic Photopolymerisation", Band III von "Chemistry & Technology of UV & EB Formulation for Coatings, Inks & Paints", 2. Ed., J. Wiley and Sons/SITA Technology (London), 1998 beschrieben.

Als unterschiedliche Anionen der Sulfonium- oder lodoniumsalze seien beispielhaft HSO₄⁻, PF₆⁻, SbF₆⁻, AsF₆⁻, Cl⁻, Br, I⁻, ClO₄⁻, PO₄⁻, SO₃CF₃⁻, Tosylat oder ein Borat-Anion, wie etwa BF₄⁻ und B(C₆F₅)₄⁻ angeführt.

Ebenfalls geeignet sind photolatente Säuren auf Basis von Aluminatanionen wie sie in der der EP 3 184 569 A1 oder der WO 2017 035 551 A1 offenbart werden.

Kommerziell als photolatente Säuren verfügbare Photoinitiatoren auf Triarylsulfoniumbasis sind unter den Markennamen Chivacure 1176 von der Firma Chitech, Irgacure PAG 290 von der Firma BASF oder UVI-6976 und UVI-6974 von der Firma Dow Chemical Co. erhältlich.

Kommerziell als photolatente Säuren verfügbare Photoinitiatoren auf Diaryliodoniumbasis sind u.a. unter den Markennamen UV1242 oder UV2257 von der Firma Deuteron und Bluesil 2074 von der Firma Bluestar erhältlich.

Neben photolatenten Säuren auf Basis von lodonium- und Sulfoniumionen sind auch nicht-ionische photolatente Säuren in den erfindungsgemäßen Massen verwendbar. Derartige Verbindungen auf Basis von Oximestern und Oximsulfonsäureestern werden in der WO 2013/083505 A1 und der EP 1 124 832 A1 beschrieben. Kommerziell verfügbare nicht-ionische photolatente Säuren auf Basis von Oximsulfonsäureestern sind unter anderem unter den Bezeichnungen Irgacure PAG 103, Irgacure PAG 121, Irgacure PAG 203 und CGI 1907 von der Firma BASF verfügbar.

Ferner können als Komponente (B) auch Trichloromethyl-Triazinverbindungen oder Benzoinester als nicht-ionische photolatente Säuren genutzt werden.

Die in den erfindungsgemäßen Massen als Säurebildner eingesetzte photolatente Säure ist vorzugsweise durch aktinische Strahlung einer Wellenlänge von 200 bis 480 nm aktivierbar, besonders bevorzugt bei einer Wellenlänge von 320 bis 480 nm. Bei Bedarf kann die photolatente Säure mit einem geeigneten Sensibilisierungsmittel kombiniert werden.

Besonders bevorzugt ist in der vorliegenden Erfindung die Verwendung der beschriebenen nicht-ionischen photolatenten Säuren als Komponente (B).

Die voranstehenden Aufzählungen sind als beispielhaft für den Säurebildner (B) zu sehen und keineswegs als limitierend zu verstehen.

Es hat sich gezeigt, dass bereits sehr geringe Konzentrationen der Komponente (B) ausreichen, um eine Aktivierung der Masse unter Wasserfreisetzung und daran anschließend eine vollständige Aushärtung zu erzielen. Dies stellt in Anbetracht der hohen Kosten der entsprechenden Säurebildner einen weiteren Vorteil dar. Ferner sind bereits geringe Mengen an freigesetzter Säure ausreichend, um eine Feuchtigkeitshärtung durch Vernetzung der Komponente (A) zu katalysieren. Weitere Katalysatoren für die Feuchtigkeitshärtung sind damit nicht zwingend nötig, können aber wahlweise zusätzlich eingesetzt werden.

In den durch Feuchtigkeit härtbaren Massen der vorliegenden Erfindung ist der Säurebildner (B), bezogen auf das Gesamtgewicht der Masse aus den Komponenten (A) bis (H), bevorzugt in einem Anteil von 0,0001 bis 5 Gew.-% enthalten, besonders bevorzugt jedoch in Anteilen von mindestens 0,001 Gew.-%, und/oder bevorzugt von höchstens 3 Gew.-%, weiter bevorzugt höchstens 1 Gew.-% oder höchstens 0,5 Gew.-% und ganz besonders bevorzugt von höchstens 0,3 Gew.-%.

Der Einsatz besonders niedriger Konzentrationen des Säurebildners (B) ist vor allem dann bevorzugt möglich, wenn nicht-ionische Photoinitiatoren verwendet werden

Es ist weiterhin möglich, mehr als einen photolatenten Säurebildner in den erfindungsgemäßen Massen zu verwenden.

### Komponente (C): Carbonylverbindung

Neben den Komponenten (A) und (B) enthalten die erfindungsgemäßen Massen als Komponente (C) ferner mindestens eine Carbonylverbindung oder ein Carbonylderivat, ausgewählt aus der Gruppe der Aldehyde, Ketone, Halbacetale und/oder Halbketale. Diese können in Gegenwart von Alkoholen und/oder Thiolen säurekatalysiert Wasser freisetzen.

Gemäß einer bevorzugten Ausführungsform umfasst die Komponente (C) mindestens eine Carbonylverbindung aus der Gruppe der Aldehyde und Ketone. Die erfindungsgemäßen Aldehyde und Ketone sind dabei in ihrer chemischen Struktur und Funktionalität nicht weiter eingeschränkt. Verwendet werden können aliphatische, cycloaliphatische, aromatische Aldehyde oder Ketone, die eine oder mehrere Carbonylgruppen tragen.

Beispiele für geeignete Aldehyde umfassen Formaldehyd, Acetaldehyd, Propionaldehyd, Butyraldehyd, Valeraldehyd, Capronaldehyd, Önanthaldehyd, Caprylaldehyd, Decanal, 2-Ethylhexanal, 2-Methylpentanal, 3-Formylpinan, Glyoxal, Glutaraldehyd, Pivaldehyd, Acrolein, Furfural, Benzaldehyd, Anisaldehyd, Zimtaldehyd, Citral, Citronellal, Cuminaldehyd, Dimethylbenzaldehyd, Veratraldehyd, Farnesal, 3-(2-Furyl)acrolein, α-Hexylzimtaldehyd, Hydroxycitronellal, Methional, 5-Methyl-2-phenyl-2-hexenal, Piperonal, Salicylaldehyd und Safranal, sowie Kombinationen davon.

Beispiele für geeignete Ketone umfassen Aceton, Diethylketon, Cyclopentanon, Cyclohexanon, 2-Oktanon, Acetanisol, Acetoin, Acetophenon, Acetovanillon, Benzophenon, Benzylidenaceton, 2-Butanon, Butyrophenon, Campher, 2-Decanon, Ethylacetoacetat, Ethylpyruvat, Jonon, Isophoron, Mesityloxid und 2,3-Pentandion, sowie Kombinationen davon.

Bei den genannten Carbonylverbindungen handelt es sich vielfach um Verbindungen, wie sie in der Aroma- und Duftstoffindustrie eingesetzt werden. Sie zeichnen sich deshalb durch eine hohe Verfügbarkeit und vielmals auch geringe Toxizitätseigenschaften aus. Ferner besitzen sie eine olfaktorisch ansprechende Note.

Besonders bevorzugt ist die Verwendung von Aldehyden in der Komponente (C), da diese in der Acetalbildung eine höhere Reaktivität als Ketone zeigen und in den erfindungsgemäßen Massen schneller Wasser frei setzen. Durch die Verwendung von Aldehyden kann somit die zur Aushärtung der erfindungsgemäßen Massen benötigte Zeit stark verkürzt werden. Insbesondere können feuchtigkeitshärtbare Massen bereitgestellt werden, die nach Bestrahlung innerhalb von 24 h, insbesondere innerhalb von höchstens sechs Stunden, in den bestrahlten Bereichen vollständig aushärten.

Neben Aldehyden und Ketonen als Komponente (C) können auch deren Derivate in Form von Teilumsetzungsprodukten mit Alkoholen und/oder Thiolen (Halbacetale oder Halbketale) verwendet werden.

Beispiele für geeignete Halbacetale und/oder Halbketale der Komponente (C) sind Kohlenhydrate, insbesondere Zucker.

Die Kombination mehrerer Carbonylverbindungen (C) miteinander oder mit Halbacetalen und/oder Halbketalen ist ebenfalls im Sinne der Erfindung.

Um den Anteil an niedermolekularen Komponenten in den erfindungsgemäßen Massen zu reduzieren, die aus den Massen ausgasen können, ist auch der Einsatz höhermolekularer Carbonylverbindungen denkbar. So können beispielsweise auch Polymere eingesetzt werden, die reaktive Aldehyd- und/oder Ketongruppen tragen.

Ebenso können Hybridverbindungen verwendet werden, die sowohl über Silanfunktionalitäten als auch geeignete Carbonylgruppen verfügen, um die Ausgasung der Komponente (C) aus den erfindungsgemäßen Massen zu verringern, da diese in das Silannetzwerk eingebunden werden können.

In den Massen der vorliegenden Erfindung liegt die Komponente (C), bezogen auf das Gesamtgewicht der Masse aus den Komponenten (A) bis (H), bevorzugt in einem Bereich von 0,1 bis 20 Gew.-% vor, weiter bevorzugt von 0,3 bis 15 Gew.-% und besonders bevorzugt von 0,5 bis 10 Gew.-%.

### Komponente (D): Alkohol und/oder Thiol

Neben den Komponenten (A) bis (C) können die erfindungsgemäßen Massen wahlweise einen Alkohol und/oder ein Thiol enthalten. Die Anwesenheit der Komponente (D) beschleunigt die Wasserfreisetzung und verkürzt damit zusätzlich die zur Durchhärtung der Massen nach Aktivierung benötigte Zeit.

Die in den erfindungsgemäßen Massen einsetzbaren Alkohole oder Thiole sind in ihrer chemischen Struktur nicht weiter eingeschränkt; sie können aliphatisch, cycloaliphatisch oder aromatisch sein.

Besonders bevorzugt ist der Einsatz von difunktionellen aliphatischen kurzkettigen Alkoholen und/oder Thiolen. Insbesondere bevorzugt ist die Verwendung von 1,2- und 1,3-substituierten Dialkoholen, welche zur Bildung cyclischer Acetale befähigt sind. Besonders bevorzugt sind aliphatische Alkohole mit 1 bis 12 C-Atomen.

Beispiele für geeignete Alkohole und Thiole umfassen die folgenden Verbindungen: Methanol, Ethanol, Propanol, Isopropanol, Ethylenglycol, 1,3 Propandiol, 1,4-Butandiol, 1,3-Butandiol, 2-Ethylhexanol, 2-Ethyl-1,3-hexandiol, 1-Octanol, Glycerin, 1,2-Ethylenglykol, 1-Propanthiol, 2-Propanthiol, Thiophenol, Ethanthiol, Octanthiol, Dodecanthiol, Mercaptoethanol und Ethandithiol.

Höhermolekulare Alkohole und/oder Thiole sind ebenfalls im Sinne der Erfindung. So können beispielsweise Alkohole auf Basis von Polycarbonaten, Polyestern oder bevorzugt Polyethern eingesetzt werden. Diese sind kommerziell unter den Handelsbezeichnungen Synalox oder Acclaim von den Firmen Dow Chemical oder Covestro erhältlich. Derartige höhermolekulare Alkohole können gleichzeitig als Weichmacher in der Formulierung fungieren.

Die Kombination mehrerer Thiole und/oder Alkohole ist ebenfalls im Sinne der Erfindung.

Ebenso können Hybridverbindungen als Komponente (D) verwendet werden, welche sowohl über Silanfunktionalitäten als auch geeignete Alkohol- und/oder Thiolgruppen verfügen, um die Ausgasung niedermolekularer Verbindungen aus den erfindungsgemäßen Massen zu verringern. Die Hybridverbindungen lassen sich aufgrund der Silanfunktionalität leicht in das Silannetzwerk einbinden.

In den Massen der vorliegenden Erfindung liegt die Komponente (D), bezogen auf das Gesamtgewicht der Masse aus den Komponenten (A) bis (H), bevorzugt in einem Bereich von 0 bis 50 Gew.-% vor, weiter bevorzugt von 0 bis 30 Gew.-% und besonders bevorzugt von 0 bis 20 Gew.-%, oder von 0,1 bis 20 Gew.-%.

### Komponente (E): Katalysator

In der zweiten bevorzugten Ausführungsform umfassen die erfindungsgemäßen Massen als Komponente (E) zusätzlich mindestens einen Katalysator für die Silanvernetzung.

Als Katalysator können metallorganische Verbindungen beispielsweise auf Basis von Blei, Eisen, Titan, Zink, Zinn, Bismut, Cobalt, Zirkonium, Vanadium und Nickel eingesetzt werden. Insbesondere Verbindungen wie Dibutylzinnlaurat, Dibutylzinndiacetat, Dibutylzinnoxid, Tetrabutyltitanat, Eisenacetylacetonat, Cobaltnaphtenat und Bleidioctat sind geeignet.

Weiter bevorzugt können saure Katalysatoren wie beispielsweise Carbonsäuren, Phosphorsäuren, Borsäuren und Sulfonsäuren als Katalysatoren eingesetzt werden. Auch Lewis-Säuren wie Trimethylsilyltrifluormethansulfonsäure oder Trimethylsilylchlorid können eingesetzt werden. Insbesondere (Meth)Acrylsäure, Maleinsäure, Essigsäure, Toluolsulfonsäure, Trifluormethansulfonsäure und Itaconsäure sind geeignet.

Ferner sind auch polymere Verbindungen mit entsprechenden Säuregruppen als Katalysatoren (E) geeignet.

Die Säurestärke des sauren Katalysators (E) ist vorzugsweise mindestens drei p*K*ₛ-Einheiten schwächer als die Säurestärke der Säure, welche aus dem Säurebildner (B) nach Bestrahlung gebildet wird.

Weniger bevorzugt sind basische Katalysatoren beispielsweise auf Basis von Aminen, da diese die aus der photolatenten Säure (B) freigesetzte Säure abfangen und somit die Wasserfreisetzung behindern können.

Die voranstehende Aufzählung ist als beispielhaft und nicht abschließend zu verstehen. Die Verwendung mehrerer Katalysatoren ist ebenfalls im Sinne der Erfindung.

In der zweiten Ausführungsform der erfindungsgemäßen Massen werden bevorzugt 0,01 bis 20 Gewichtsprozent, besonders bevorzugt 0,1 bis 5 Gewichtsprozent der Komponente (E) eingesetzt, hier bezogen auf das Gesamtgewicht der Masse aus den Komponenten (A) bis (H).

### Komponente (F): Strahlungshärtbare Verbindung

In einer dritten bevorzugten Ausführungsform umfassen die erfindungsgemäßen Massen zusätzlich mindestens eine strahlungshärtende Verbindung (F). Diese ist hinsichtlich ihrer chemischen Grundstruktur (z.B. aromatisch, aliphatisch, cycloaliphatisch) nicht weiter eingeschränkt. Bevorzugt umfasst die strahlungshärtende Verbindung (F) wenigstens ein (Meth)Acrylat.

Die Bezeichnung "(Meth)Acrylat" sowie sinngleiche Bezeichnungen stehen hier und im Folgenden sowohl für Derivate der Acrylsäure, als auch der Methacrylsäure, und Mischungen davon.

Geeignete strahlungshärtbare Verbindungen (F) umfassen beispielsweise: Isobornylacrylat, Stearylacrylat, Tetrahydrofurfurylacrylat, Cyclohexylacrylat, 3,3,5-Trimethylcyclohexanolacrylat, Behenylacrylat, 2-Methoxyethylacrylat und andere ein- oder mehrfach alkoxylierte Alkylacrylate, Isobutylacrylat, Isooctylacrylat, Laurylacrylat, Tridecylacrylat, Isostearylacrylat, 2-(o-Phenylphenoxy)ethylacrylat, Acryloylmorpholin, N,N-Dimethylacrylamid, 4-Butandioldiacrylat, 1,6-Hexandioldiacrylat, 1,10-Decandioldiacrylat, Tricyclodecandimethanoldiacrylat, Dipropylenglycoldiacrylat, Tripropylenglycoldiacrylat, Polybutadiendiacrylat, Cyclohexandimethanoldiacrylat, Diurethanacrylate von monomeren, oligomeren oder polymeren Diolen und Polyolen, Trimethylolpropantriacrylat (TMPTA), und Dipentaerythritolhexaacrylat (DPHA), und Kombinationen davon. Auch von mehrfach verzweigten oder dendrimeren Alkoholen abgeleitete höherfunktionelle Acrylate können vorteilhaft verwendet werden

Die analogen Methacrylate sind ebenfalls im Sinne der Erfindung.

Als höhermolekulare strahlungshärtbare Verbindung können Urethanacrylate auf Basis von Polyestern, Polyethern, Polycarbonatdiolen und/oder (hydrierten) Polybutadiendiolen als Komponente (F) zum Einsatz kommen.

(Meth)Acrylate mit freien Säuregruppen können sowohl als strahlungshärtbare Komponente (F) in den erfindungsgemäßen Massen agieren, als auch als saurer Katalysator (E) die Silanvernetzung katalysieren.

Eine Kombination mehrerer strahlungshärtbarer Verbindungen ist ebenfalls im Sinne der Erfindung.

Die strahlungshärtende Verbindung (F) liegt in den erfindungsgemäßen Massen der dritten Ausführungsform bevorzugt in einem Anteil von 3 bis 80 Gewichtsprozent vor, besonders bevorzugt in einem Anteil von 5 bis 50 Gewichtsprozent, bezogen auf das Gesamtgewicht der Masse aus den Komponenten (A) bis (H).

### Komponente (G): Radikalischer Photoinitiator

Neben der strahlungshärtbaren Verbindung (F) enthalten die Massen der dritten Ausführungsform der Erfindung noch einen Photoinitiator (G) zur Aktivierung der radikalischen Polymerisation. Als radikalische Photoinitiatoren können die üblichen, im Handel erhältlichen Verbindungen eingesetzt werden, wie beispielsweise α-Hydroxyketone, Benzophenon, α,α'-Diethoxyacetophenon, 4,4-Diethylaminobenzophenon, 2,2-Dimethoxy-2-phenylacetophenon, 4-Isopropylphenyl-2-hydroxy-2-propylketon, 1-Hydroxycyclohexylphenylketon, Isoamyl-p-dimethylaminobenzoat, Methyl-4-dimethylaminobenzoat, Mehtyl-o-benzoylbenzoat, Benzoin, Benzoinethylether, Benzoinisopropylether, Benzoinisobutylether, 2-Hydroxy-2-methyl-1-phenylpropan-1-on, 2-Isopropylthioxanthon, Dibenzosuberon, 2,4,6-Trimethylbenzoyldiphenylphosphinoxid und Bisacylphosphinoxide, wobei die genannten Photoinitiatoren allein oder in Kombination von zwei oder mehreren der genannten Verbindungen verwendet werden können.

Als UV-Photoinitiatoren können beispielsweise die IRGACURE^{™}-Typen von BASF SE eingesetzt werden, so beispielsweise die Typen IRGACURE 184, IRGACURE 500, IRGACURE 1179, IRGACURE 2959, IRGACURE 745, IRGACURE 651, IRGACURE 369, IRGACURE 907, IRGACURE 1300, IRGACURE 819, IRGACURE 819DW, IRGACURE 2022, IRGACURE 2100, IRGACURE 784, IRGACURE 250, IRGACURE TPO, IRGACURE TPO-L. Ferner sind die DAROCUR^{™}-Typen von BASF SE verwendbar, so beispielsweise die Typen DAROCUR MBF, DAROCUR 1173, DAROCUR TPO und DAROCUR 4265.

Der in den erfindungsgemäßen Massen als Komponente (G) eingesetzte radikalische Photoinitiator ist vorzugsweise durch aktinische Strahlung einer Wellenlänge von 200 bis 600 nm aktivierbar, besonders bevorzugt von 320 bis 480 nm. Bei Bedarf kann der Photoinitiator mit einem geeigneten Sensibilisierungsmittel kombiniert werden.

Der Photoinitiator (G) liegt in den erfindungsgemäßen Massen der dritten Ausführungsform bevorzugt in einem Anteil von 0,01 bis 5 Gew.-% vor, bezogen auf das Gesamtgewicht der Masse aus den Komponenten (A) bis (H).

### Komponente (H): Zusatzstoffe

Die beschriebenen Massen können darüber hinaus noch fakultative Bestandteile als Zusatzstoffe (H) enthalten. Die Zusatzstoffe (H) sind vorzugsweise aus der Gruppe der Füllstoffe, Farbstoffe, Pigmente, Alterungsschutzmittel, Fluoreszenzmittel, Stabilisatoren, Beschleuniger, Photosensibilisatoren, Haftvermittler, Feuchtigkeitsfänger, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier ausgewählt.

Die vorangegangene Aufzählung an Zusatzstoffen ist als beispielhaft und keineswegs limitierend zu erachten.

Die Zusatzstoffe der Komponente (H) liegen in den erfindungsgemäßen Massen bevorzugt in einem Anteil von 0 bis 70 Gew% vor, bezogen auf das Gesamtgewicht der Komponenten (A) bis (H).

### Formulierung der erfindungsgemäßen Massen

Die erfindungsgemäßen Einkomponentenmassen weisen bevorzugt die folgende Zusammensetzung auf, jeweils bezogen auf das Gesamtgewicht der Komponenten (A) bis (H):
(A) mindestens eine feuchtigkeitshärtbare Verbindung in einem Anteil von 10 bis 99 Gew.-%, wobei die feuchtigkeitshärtbare Verbindung mindestens ein difunktionelles Alkoxysilan (A1) und wahlweise ein monofunktionelles Alkoxysilan (A2) umfasst;
(B) mindestens einen Säurebildner in einem Anteil von 0,0001 bis 3 Gew.-%, bevorzugt 0,001 bis 1 Gew.-%;
(C) mindestens eine Carbonylverbindung und/oder ein Carbonylderivat in einem Anteil von 0,3 bis 15 Gew.-%;
(D) mindestens eine Verbindung aus der Gruppe der Alkohole und/oder Thiole in einem Anteil von 0 bis 30 Gew.-%, oder bevorzugt 0,1 bis 20 Gew.-%;
(E) mindestens einen Katalysator für die Silanvernetzung in einem Anteil von 0 bis 20 Gew.-%, bevorzugt 0,1 bis 5 Gew.-%; weiter bevorzugt in Form eines sauren Katalysators;
(F) mindestens eine strahlungshärtbare Verbindung in einem Anteil von 0 bis 50 Gew.-%, bevorzugt 5 bis 50 Gew.-%;
(G) mindestens einen radikalischen Photoinitiator in einem Anteil von 0 bis 5 Gew.-%, bevorzugt 0,01 bis 5 Gew.-%; und
(H) mindestens einen Zusatzstoff (H) in einem Anteil von 0 bis 70 Gew.-%; vorzugsweise ausgewählt aus der Gruppe der Füllstoffe, Farbstoffe, Pigmente, Photosensibilisatoren, Alterungsschutzmittel Fluoreszenzmittel, Stabilisatoren, Feuchtigkeitsfänger, Beschleuniger, Haftvermittler, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier, allein oder in Kombination miteinander.

Eine Formulierung der erfindungsgemäßen Einkomponentenmasse in einer ersten bevorzugten Ausführungsform umfasst die folgenden Komponenten, jeweils bezogen auf das Gesamtgewicht der Komponenten (A) bis (H):
(A) 10 bis 99 Gew.-% der feuchtigkeitshärtbaren Verbindung, wobei die feuchtigkeitshärtbare Verbindung mindestens ein difunktionelles Alkoxysilan (A1) und wahlweise ein monofunktionelles Alkoxysilan (A2) umfasst;
(B) 0,0001 bis 3 Gew.-%, bevorzugt 0,001 bis 1 Gew.-%, des mindestens einen Säurebildners (B);
(C) 0,3 - 15 Gew.-% der mindestens einen Carbonylverbindung (C);
(D) 0 bis 30 Gew.-% des mindestens einen Alkohols (D), oder bevorzugt 0,1 bis 20 Gew.-%; und
(H) 0 bis 70 Gew.-% des wenigstens einen Zusatzstoffes.

Bevorzugt ist die erfindungsgemäße Masse der ersten Ausführungsform frei von Katalysatoren (E) für die Silanvernetzung und enthält auch keine strahlungshärtende Verbindung (F) und keinen radikalischen Photoinitiator (G). Die Masse besteht somit bevorzugt aus den Komponenten (A), (B), (C) und wahlweise wenigstens einer der Komponenten (D) und (H).

Eine Formulierung der erfindungsgemäßen Einkomponentenmasse nach einer zweiten bevorzugten Ausführungsform umfasst die folgenden Komponenten, jeweils bezogen auf das Gesamtgewicht der Komponenten (A) bis (H):
(A) 10 bis 99 Gew.-% der feuchtigkeitshärtbaren Verbindung (A), wobei die feuchtigkeitshärtbare Verbindung mindestens ein difunktionelles Alkoxysilan (A1) und wahlweise ein monofunktionelles Alkoxysilan (A2) umfasst;
(B) 0,0001 bis 3 Gew.-%, bevorzugt 0,001 bis 1 Gew.-%, des mindestens einen Säurebildners (B);
(C) 0,3 - 15 Gew.-% der mindestens einen Carbonylverbindung (C);
(D) 0 bis 30 Gew.-% des mindestens einen Alkohols (D), oder bevorzugt 0,1 bis 20 Gew.-%;
(E) 0,01 bis 20 Gew.-% des mindestens einen Katalysators (E), vorzugsweise eines sauren Katalysators; und
(H) 0 bis 70 Gew.-% des wenigstens eines Zusatzstoffes.

Eine Formulierung der erfindungsgemäßen Einkomponentenmasse nach einer dritten bevorzugten Ausführungsform umfasst die folgenden Komponenten, jeweils bezogen auf das Gesamtgewicht der Komponenten (A) bis (H):
(A) 10 bis 90 Gew.-% der feuchtigkeitshärtbaren Verbindung (A) , wobei die feuchtigkeitshärtbare Verbindung mindestens ein difunktionelles Alkoxysilan (A1) und wahlweise ein monofunktionelles Alkoxysilan (A2) umfasst;
(B) 0,0001 bis 3 Gew.-%, bevorzugt 0,001 bis 1 Gew.-%, des mindestens einen Säurebildners (B);
(C) 0,3 - 15 Gew.-% der mindestens einen Carbonylverbindung (C);
(D) 0 bis 20 Gew.-% des mindestens einen Alkohols (D), oder bevorzugt 0,1 bis 20 Gew.-%;
(E) 0 bis 20 Gew.-% des mindestens einen Katalysators für die Silanvernetzung (E), bevorzugt einen sauren Katalysator;
(F) 5 bis 50 Gew.-% der mindestens einen strahlungshärtbaren Verbindung (F) auf Basis von (Meth)Acrylaten;
(G) 0,01 bis 5 Gew.-% des mindestens einen Photoinitiators (G) für die radikalische Polymerisation; und
(H) 0 bis 70 Gew.-% des wenigstens einen Zusatzstoffes.

Vorzugsweise bestehen die erfindungsgemäßen Massen aus den oben für die jeweiligen Ausführungsformen angegebenen Komponenten.

Überraschenderweise hat sich gezeigt, dass die erfindungsgemäßen Massen bereits ohne einen zusätzlichen Alkohol und/oder ein Thiol (D) eine schnelle Feuchtigkeitshärtung auch in hohen Schichtdicken aufweisen. Durch die strahlungsinduzierte Hydrolyse der Alkoxysilangruppen der Komponente (A) kommt es zu einer Freisetzung der korrespondierenden Alkohole aus den Alkoxygruppen, die in der Folge für die Acetalisierung oder Ketalisierung der Carbonylverbindung (C) zur Verfügung stehen.

Durch die Zugabe von Alkoholen und/oder Thiolen als separate Komponente (D) kann die Feuchtigkeitshärtung der erfindungsgemäßen Massen noch zusätzlich beschleunigt werden.

### Verwendung der erfindungsgemäßen Massen

Die erfindungsgemäßen Massen lassen sich durch aktinische Strahlung aktivieren und durch Feuchtigkeit härten. Im Gegensatz zum Stand der Technik härten die erfindungsgemäßen Massen dabei weitestgehend unabhängig von der Umgebungsfeuchtigkeit und der applizierten Schichtdicke aus. Die Massen zeichnen sich gegenüber dem Stand der Technik dadurch aus, dass die Wasserfreisetzung effizient durch Bestrahlung, ohne zusätzlichen Wärmeeintrag, möglich ist. Selbstverständlich kann durch einen wahlweisen Wärmeeintrag die Vernetzungsreaktion weiter beschleunigt werden.

Die Freisetzung einer Säure aus der Komponente (B) durch Bestrahlung induziert dabei sowohl die Wasserfreisetzung in den Massen, als auch die Vernetzung der feuchtigkeitshärtbaren Alkoxysilangruppen.

Die Massen härten nach einer Bestrahlung innerhalb von sieben Tagen bei Raumtemperatur aus; bevorzugt innerhalb von 24 h und ganz besonders bevorzugt innerhalb von 6 h, auch bei Ausschluss von externem Feuchtigkeitszutritt.

Die Aushärtegeschwindigkeit hängt dabei maßgeblich von dem Äquivalentverhältnis aller silangebundenen Alkoxygruppen der feuchtigkeitshärtbaren Komponenten (A) zu den Äquivalenten der Carbonylverbindungen in Komponente (C) ab. Die erfindungsgemäßen Massen werden bevorzugt so formuliert, dass pro Äquivalent silangebundener Alkoxygruppen in Komponente (A) 0,01 bis 3 Äquivlalente Carbonylguppen in Komponente (C) vorliegen, vorzugsweise 0,05 bis 2 Äquivalente und besonders bevorzugt 0,1 bis 1 Äquivalente Carbonylgruppen.

Bevorzugt erfolgt die Aktivierung der Massen unmittelbar vor der Applikation oder nach der Applikation auf ein Substrat.

Eine Aktivierung der Masse unmittelbar vor der Applikation kann mittels einer Bestrahlung der Masse in einer Durchflussaktivierungsapparatur erfolgen. Geeignete Dosiervorrichtungen zur Durchflussaktivierung der Massen durch Bestrahlung sind in der DE 3 702 999 A und der DE 10 2007 017 842 A1 beschrieben.

Wesentlich dabei ist, dass die Verweilzeit der Masse nach Aktivierung in einer Dosiervorrichtung nicht die Offenzeit der aktivierten Masse übersteigt.

Gemäß einer bevorzugten Ausführungsform wird ein Verfahren zum Verkleben, Abformen, Abdichten und Beschichten von Substraten unter Verwendung der erfindungsgemäßen Masse bereitgestellt, welches folgende Schritte umfasst
a) Dosieren der Masse auf ein erstes Substrat;
b) Aktivieren der Masse durch Bestrahlen mit aktinischer Strahlung einer geeigneten Wellenlänge während eines ausreichend langen Zeitraums, so dass aus dem Säurebildner eine Säure freigesetzt wird;
c) Wahlweise Zuführen eines zweiten Substrates zur aktivierten Masse innerhalb einer Offenzeit unter Bildung eines Substratverbundes;
d) Einhalten einer Wartezeit bis zum Erreichen einer ersten Festigkeit der Masse auf dem Substrat oder im Substratverbund.

Das beschriebene Verfahren kann ebenfalls in einer Durchflussaktivierungsapparatur oder einem durchstrahlbaren Vorratsgefäß durchgeführt werden. In diesen Fällen erfolgt Schritt b) vor Schritt a). Wesentlich ist dabei, dass die bestrahlte Masse innerhalb der Apparatur oder dem Vorratsgefäß keinen übermäßigen Standzeiten ausgesetzt wird, da die Masse sonst auch ohne Zutritt von Feuchtigkeit in der Apparatur aushärten kann.

Im Falle von zwei oder mehreren Fügepartnern, von denen mindestens einer durchstrahlbar ist, kann der Aktivierungsschritt b) auch nach Schritt c) erfolgen.

Die erfindungsgemäßen Massen eignen sich insbesondere als Klebstoff oder Dichtstoff zum Verkleben, Abformen, Abdichten und Beschichten von beliebigen Substraten.

### Verwendete Messverfahren und Definitionen

### Bestrahlung

Zur Bestrahlung wurde eine LED-Lampe DELOLUX 20 der Firma DELO Industrie Klebstoffe GmbH & Co. KGaA mit einer Wellenlänge von 460 nm verwendet. Die Massen wurden in der Kartusche mit einer Intensität von 200 ± 20 mW/cm² bestrahlt. Dabei wurde die Kartusche von zwei Seiten jeweils 60 s lang bestrahlt.

### Aushärtung

"Vernetzung" oder "Aushärtung" werden definiert als Polymerisations-, Kondensations- oder Additionsreaktion über den Gelpunkt hinaus. Der Gelpunkt ist der Punkt, an dem das Speichermodul G' gleich dem Verlustmodul G" wird. Zur Beurteilung der Aushärtung (fest vs. flüssig) wird die in den Kartuschen aktivierte Masse herausgedrückt und einer haptischen Prüfung mit einem Kunststoffspatel unterzogen. Sofern ein Herausdrücken der Masse nicht mehr möglich war, wurde mit einem Zahnstocher die Konsistenz der Masse über die Kartuschenspitze geprüft.

### Raumtemperatur

Raumtemperatur ist definiert als 23 ± 2 °C.

### Viskosität

Die Viskosität der Massen wurde mit einem Rheometer Physica MCR302 der Firma Anton Paar mit einem standardisierten Messkegel PP20 bei 23 °C mit einem 200 µm Spalt gemessen und bei einer Scherrate von 10/Sekunde bestimmt. Zur Beurteilung der Lagerstabilität wurde die Viskositätsmessung bei Raumtemperatur nach 7 Tagen Lagerung der Massen bei Raumtemperatur unter Licht- und Feuchtigkeitsausschluss wiederholt. Dabei gilt eine Viskositätsänderung kleiner 10% zum Ausgangswert als ausgezeichnet (++), kleiner 25% als sehr gut (+), kleiner 50% als gut (o), kleiner 100% als ausreichend (-) und größer 100% als ungenügend (--).

### Kartuschen

Als Kartuschen wurden durchstrahlbare 5 ml SEMCO-Kartuschen der Firma PPG Industries eingesetzt.

### Nachweis und Ausmaß der Wasserfreisetzung

Die Bestimmung des Ausmaßes der Wasserfreisetzung erfolgte in Anlehnung an die DIN 53715. Dazu wurde ein Testsystem aus 15 Gewichtsteilen Benzaldehyd, 36,2 Teilen Methanol, 0,1 Teilen einer photolatenten Säure (Irgacure PAG 103) und 48,7 Teilen Toluol unter Ausschluss von Licht kleiner 500 nm hergestellt und die Komponenten miteinander vermischt. Das System war dabei frei von feuchtigkeitshärtbaren Verbindungen. Die klare, gelbe Lösung wurde zunächst ohne vorherige Bestrahlung einer Karl-Fischer-Analyse unterworfen. Anschließend wurde eine Probe mit Licht einer Wellenlänge von 400 nm (Bestrahlungslampe DELOLUX 80) und einer Intensität von 1000 mW/cm² unter Rühren 4 min bestrahlt. Unmittelbar im Anschluss, sowie nach 2 h wurden von der bestrahlten Probe weitere Karl-Fischer-Analysen durchgeführt. Der Wassergehalt betrug vor Bestrahlung 0,11 Gew.-% und lag direkt nach Bestrahlung bei 1,46 Gew.-% sowie nach 2 h bei 1,54 Gew.-%.

Damit ist ersichtlich, dass in einem System aus photolatenter Säure, Carbonylverbindung und Alkohol eine erhebliche Menge Wasser durch Bestrahlen generiert werden kann.

### Herstellungsbeispiele

Zur Herstellung der Einkomponentenmassen gemäß den nachfolgend angegebenen Beispielen wurden die folgenden Komponenten eingesetzt:
Komponente (A): feuchtigkeitshärtbare Verbindungen
   (A1): Difunktionelle Silanverbindung
      (A1-1) Geniosil STP-E 10 (erhältlich von der Firma Wacker Chemie AG)
      (A1-2) Geniosil STP-E 15 (erhältlich von der Firma Wacker Chemie AG)
   (A2): Monofunktionelle Silanverbindung
      (A2-1) Geniosil XL 33 (erhältlich von der Firma Wacker Chemie AG)
      (A2-2) Dynasylan VTMO (erhältlich von der Firma Evonik Industries AG)
      (AS-3) Geniosil XL 63 (erhältlich von der Firma Wacker Chemie AG)
Komponente (B): Säurebildner
   (B1) Irgacure PAG 121 (erhältlich von der Firma BASF SE)
Komponente (C): Carbonylverbindung
   (C1) Benzaldehyd (erhältlich von der Firma Sigma Aldrich)
   (C2) Aceton (erhältlich von der Firma Sigma Aldrich)
Komponente (D): Alkohol, Thiol
   (D1) Methanol (erhältlich von der Firma Sigma Aldrich)
   (D2) 1,3- Propandiol (erhältlich von der Firma Sigma Aldrich)
Komponente (E): Katalysator
   (E1) Acrylsäure (erhältlich von der Firma Sigma Aldrich)
Komponente (F): strahlungshärtbare Verbindung
   (F1) Isobornylacrylat (IBOA; erhältlich von der Firma Sartomer)
Komponente (G): Radikalischer Photoinitiator
   (G1) Speedcure TPO-L (erhältlich von der Firma Lambson)
Komponente (H): Zusatzstoffe
   (H1) Weichmacher: OXSOFT TOTM (erhältlich von der Firma Oxea)
   (H2) Stabilisator: Irganox 1135 (erhältlich von der Firma BASF SE)

Zur Herstellung der erfindungsgemäßen Massen wurden unter Ausschluss von Licht mit Wellenlängen kleiner 500 nm die Komponenten (A) vorgelegt und der Säurebildner (B) bei 50 °C für 15 Minuten eingelöst. Abschließend wurden jeweils die übrigen Komponenten zugefügt und mit einem Dissolver eingearbeitet. Vergleichsbeispiele wurden in analoger Weise hergestellt.

Die Zusammensetzung der erfindungsgemäßen Massen und der Vergleichsbeispiele ist in den nachfolgenden Tabellen angegeben. Die Anteile bedeuten jeweils Gewichtsprozent bezogen auf das Gesamtgewicht der Masse aus den Komponenten (A) bis (H).

Formulierung der erfindungsgemäßen Massen

**Tabelle 1**

| **Komponenten** | | Vergleich | | erfindungsgemäße Beispiele | | | | | | | | | | |
|---|---|---|---|---|---|---|---|---|---|---|---|---|---|---|
| **Bsp.** | | **1¹** | **2** | **3** | **4** | **5** | **6** | **7** | **8** | **9** | **10** | **11** | **12** | **13** |
| **(A)** | Silan (A1-1) | 65 | 98,4 | 94,15 | 65 | 65 | 65 | 65 | 65 | 65 | 65 | 65 | 65 | - |
| | Silan (A1-2) | - | - | - | - | - | - | - | - | - | - | - | - | 70 |
| | Silan (A2-1) | 5 | - | - | 5 | 5 | 5 | 5 | 5 | 5 | 5 | 5 | 5 | - |
| | Silan (A2-2) | 1,5 | 1,5 | 1,5 | 1,5 | 1,5 | 1,5 | 1,5 | 1,5 | 1,5 | 1,5 | 1,5 | 1,5 | 1,5 |
| **(B)** | (B1) | 0,1 | 0,1 | 0,1 | 0,1 | 0,1 | 0,1 | 0,1 | 0,1 | 0,1 | 0,1 | 0,1 | 0,1 | 0,1 |
| **(C)** | Aldehyd (C1) | - | - | 4,25 | 8,49 | 6,37 | 4,25 | 2,12 | 1,06 | 0,53 | - | - | - | 4,25 |
| | Keton (C2) | - | - | - | - | - | - | - | - | - | 3,48 | 2,32 | 1,16 | - |
| **(H)** | (H1) | 28 | - | - | 19,51 | 21,63 | 23,75 | 25,88 | 26,94 | 27,47 | 24,52 | 25,68 | 26,84 | 23,75 |
| | (H2) | 0,4 | - | - | 0,4 | 0,4 | 0,4 | 0,4 | 0,4 | 0,4 | 0,4 | 0,4 | 0,4 | 0,4 |

| **Eigenschaften der Massen** | | | | | | | | | | | | | | |
|---|---|---|---|---|---|---|---|---|---|---|---|---|---|---|
| Zeit bis zur Aushärtung in der Kartusche nach Bestrahlung (2*60s 460nm) bei Raumtemperatur | | > 7 d, flüssig | > 7 d, flüssig | 140 min | 30 min | 50 min | 140 min | 240 min | 24 h | 7 d | 21,5 h | 45,5 h | 7 d | 24 h |
| Lagerstabilität Viskositätsänderung nach Lagerung von 7d bei Raumtemperatur | | ++ | ++ | ++ | ++ | ++ | ++ | ++ | ++ | ++ | ++ | ++ | ++ | ++ |

| | | | | | | | | | | | | | | |
|---|---|---|---|---|---|---|---|---|---|---|---|---|---|---|
| ¹ siehe DE 10 2016 111 590 A1 | | | | | | | | | | | | | | |

**Tabelle 2**

| **Komponenten** | | Referenzbeispiele | | Vergleich | erfindungsgemäße Beispiele | | | | | |
|---|---|---|---|---|---|---|---|---|---|---|
| **Bsp.** | | **7** | **12** | **14** | **15** | **16** | **17** | **18** | **19** | **20** |
| **(A)** | Silan (A1-1) | 65 | 65 | 65 | 65 | 65 | 65 | 65 | 65 | 65 |
| | Silan (A2-1) | 5 | 5 | 5 | 5 | 5 | 5 | 5 | 5 | 5 |
| | Silan (A2-2) | 1,5 | 1,5 | 1,5 | 1,5 | 1,5 | 1,5 | 1,5 | 1,5 | 1,5 |
| **(B)** | (B1) | 0,1 | 0,1 | 0,1 | 0,1 | 0,1 | 0,1 | 0,1 | 0,1 | 0,1 |
| **(C)** | Aldehyd (C1) | 2,12 | - | - | 2,12 | 2,12 | 2,12 | 2,12 | 2,12 | - |
| | Keton (C2) | - | 1,16 | - | - | - | - | - | - | 1,16 |
| **(D)** | (D1) | - | - | - | 0,32 | 0,96 | - | - | - | - |
| | (D2) | - | - | 2,28 | - | - | 0,76 | 1,14 | 2,28 | 2,28 |
| **(H)** | (H1) | 25,88 | 26,84 | 25,72 | 25,56 | 24,92 | 25,12 | 24,74 | 23,6 | 24,56 |
| | (H2) | 0,4 | 0,4 | 0,4 | 0,4 | 0,4 | 0,4 | 0,4 | 0,4 | 0,4 |

| **Eigenschaften der Massen** | | | | | | | | | | |
|---|---|---|---|---|---|---|---|---|---|---|
| Zeit bis zur Aushärtung in der Kartusche nach Bestrahlung (2*60s 460nm) bei Raumtemperatur | | 240 min | 7 d | > 7 d, flüssig | 180 min | 180 min | 30 min | 10 min | 20 min | 30 min |
| Lagerstabilität | | ++ | ++ | ++ | ++ | ++ | + | + | ++ | ++ |
| Viskositätsänderung nach Lagerung von 7d bei Raumtemperatur | | | | | | | | | | |

**Tabelle 3**

| **Komponenten** | | erfindungsgemäße Beispiele | | Vergleich |
|---|---|---|---|---|
| **Bsp.** | | **21** | **22** | **23** |
| **(A)** | Silan (A1-1) | 65 | 65 | 65 |
| | Silan (A2-1) | 5 | 1 | 1 |
| | Silan (A2-2) | 1,5 | 1,5 | 1,5 |
| | Silan (A2-3) | - | 0,5 | 0,5 |
| **(B)** | (B1) | 0,1 | 0,1 | 0,1 |
| **(C)** | (C1) | 4,25 | 4,25 | - |
| **(E)** | (E1) | 3 | 3 | 3 |
| **(F)** | (F1) | - | 7 | 7 |
| **(G)** | (G1) | - | 0,6 | 0,6 |
| **(H)** | (H1) | 20,75 | 16,65 | 20,9 |
| | (H2) | 0,4 | 0,4 | 0,4 |

| **Eigenschaften der Massen** | | | | |
|---|---|---|---|---|
| Zeit bis zur Aushärtung in der Kartusche nach Bestrahlung (2*60s 460nm) bei Raumtemperatur | | 1 h | 30 min | > 7 d, flüssig |
| Lagerstabilität | | + | 0 | ++ |
| Viskositätsänderung nach Lagerung von 7d bei Raumtemperatur | | | | |
| Hautbildung bei offener Lagerung bei 23°C/50% rel. Feuchte ohne Bestrahlung | | 16 h | 6 h | 6 h |

Die erfindungsgemäßen Beispiele 3 bis 9 in Tabelle 1 enthalten als Komponente (C) einen Aldehyd. Diese Formulierungen härten nach Bestrahlen auch unter Ausschluss eines externen Feuchtigkeitszutritts innerhalb von bis zu 7 Tagen aus, während die Vergleichsbeispiele 1 und 2 auch nach sieben Tagen unter Ausschluss externen Feuchtigkeitszutritts flüssig bleiben. Die Geschwindigkeit der Aushärtung kann über die Menge des zugegebenen Aldehyds gesteuert werden. Wie in den Beispielen 10 bis 12 gezeigt, ermöglichen auch Ketone eine Aushärtung unter Ausschluss eines externen Feuchtigkeitszutritts. Neben α-Silanpolymeren können auch Massen verwendet werden, die als feuchtigkeitshärtbare Verbindungen ausschließlich γ-Silanpolymere enthalten, wie in Beispiel 13 gezeigt.

Tabelle 2 zeigt die Beschleunigung der Aushärtung durch Zusatz von Alkoholen als Komponente (D). Während ein monofunktioneller Alkohol in den erfindungsgemäßen Beispielen 15 und 16 eine leichte Beschleunigung gegenüber dem erfindungsgemäßen Beispiel 7 zeigt, ist der Beschleunigungseffekt durch einen difunktionellen Alkohol (D2), der zur Bildung eines cyclischen Acetals befähigt ist, in den Beispielen 17 bis 20 deutlich sichtbar. Der Zusatz eines Alkohols in Abwesenheit einer Carbonylverbindung (C) zeigt keine Beschleunigung der Feuchtigkeitshärtung (Vergleichsbeispiel 14).

Überraschenderweise ist es auch möglich, in den erfindungsgemäßen Massen eine nicht-latente Säure als Katalysator (E) einzusetzen, wie in Beispiel 21 gezeigt, ohne die Lagerstabilität zu stark zu verschlechtern (siehe Tabelle 3). Auch hier kann nach Aktivierung der Masse durch Bestrahlung eine Aushärtung unter Ausschluss eines externen Feuchtigkeitszutritts innerhalb von 1 h erfolgen. Diese Masse härtet jedoch auch ohne Bestrahlung, aber nach Zutritt externer Feuchtigkeit aus.

In der Masse von Beispiel 22 sind zusätzlich eine strahlungshärtbare Verbindung (F) und ein Photoinitiator (G) enthalten. Dabei ist der Anteil der strahlungshärtbaren Verbindung (F) so gewählt, dass die Masse kurz nach dem Bestrahlen noch flüssig ist und dann innerhalb von 30 min aushärtet, während die Masse gemäß Vergleichsbeispiel 23, die keine Carbonylverbindung als Komponente (C) enthält, unter diesen Bedingungen flüssig bleibt. Der Fachmann erkennt selbstverständlich, dass die Anteile der strahlungshärtbaren Verbindungen (F) auch so gewählt werden können, dass die Masse direkt durch den radikalischen Prozess ausgehärtet werden kann und die Feuchtigkeitshärtung im bereits vergelten Material bis zum Erreichen der Endfestigkeit fortschreitet.

## Patentansprüche

1. Feuchtigkeitshärtbare Einkomponentenmasse, die durch Bestrahlung mit aktinischer Strahlung aktivierbar ist, umfassend
eine oder mehrere feuchtigkeitshärtbare Verbindungen (A), ausgewählt aus der Gruppe der Alkoxysilane, wobei das Alkoxysilan der Komponente (A) mindestens difunktionell in Bezug auf Alkoxysilangruppen ist;
mindestens einen Säurebildner (B), der unter Einwirkung von aktinischer Strahlung eine Säure freisetzt, und
mindestens eine Carbonylverbindung und/oder ein Carbonylderivat (C), ausgewählt aus der Gruppe der Aldehyde, Ketone, Halbacetale oder Halbketale.

2. Einkomponentenmasse nach Anspruch 1, **dadurch gekennzeichnet, dass** die Einkomponentenmasse nach der Aktivierung der Masse durch Bestrahlung ohne externen Feuchtigkeitszutritt aushärtet.

3. Einkomponentenmasse nach Anspruch 1 oder 2, **dadurch gekennzeichnet, dass** das mindestens difunktionelle Alkoxysilan der Komponente (A) ein difunktionelles α-Alkoxysilan umfasst.

4. Einkomponentenmasse nach einem der vorhergehenden Ansprüche, **dadurch gekennzeichnet, dass** die Einkomponentenmasse zusätzlich mindestens einen Katalysator (E) für die Silanvernetzung umfasst, bevorzugt einen sauren Katalysator.

5. Einkomponentenmasse nach einem der vorhergehenden Ansprüche, **dadurch gekennzeichnet, dass** die Einkomponentenmasse zusätzlich mindestens eine strahlungshärtbare Verbindung (F) und mindestens einen radikalischen Photoinitiator (G) umfasst.

6. Einkomponentenmasse nach einem der vorhergehenden Ansprüche, **dadurch gekennzeichnet, dass** die Einkomponentenmasse mindestens eine Verbindung aus der Gruppe der Alkohole und/oder Thiole (D) umfasst, bevorzugt einen aliphatischen Alkohol und/oder ein aliphatisches Thiol, weiter bevorzugt einen Dialkohol und/oder ein Dithiol, besonders bevorzugt 1,2-Dialkohole, 1,3-Dialkohole, 1,2-Dithiole oder 1,3-Dithiole, und deren Mischungen.

7. Einkomponentenmasse nach einem der vorhergehenden Ansprüche, umfassend:
(A) mindestens eine feuchtigkeitshärtbare Verbindung in einem Anteil von 10 bis 99 Gew.-%, wobei die feuchtigkeitshärtbare Verbindung mindestens ein difunktionelles Alkoxysilan (A1) und wahlweise ein monofunktionelles Alkoxysilan (A2) umfasst;
(B) mindestens einen Säurebildner in einem Anteil von 0,0001 bis 3 Gew.-%, bevorzugt 0,001 bis 1 Gew.-%;
(C) mindestens eine Carbonylverbindung und/oder ein Carbonylderivat in einem Anteil von 0,3 bis 15 Gew.-%;
(D) mindestens eine Verbindung aus der Gruppe der Alkohole und/oder Thiole in einem Anteil von 0 bis 30 Gew.-%, oder bevorzugt 0,1 bis 20 Gew.-%;
(E) mindestens einen Katalysator für die Silanvernetzung in einem Anteil von 0 bis 20 Gew.-%, bevorzugt 0,1 bis 5 Gew.-%; weiter bevorzugt in Form eines sauren Katalysators;
(F) mindestens eine strahlungshärtbare Verbindung in einem Anteil von 0 bis 50 Gew.-%, bevorzugt 5 bis 50 Gew.-%;
(G) mindestens einen radikalischen Photoinitiator in einem Anteil von 0 bis 5 Gew.-%, bevorzugt 0,01 bis 5 Gew.-%; und
(H) mindestens einen Zusatzstoff (H) in einem Anteil von 0 bis 70 Gew.-%; vorzugsweise ausgewählt aus der Gruppe der Füllstoffe, Farbstoffe, Pigmente, Photosensibilisatoren, Alterungsschutzmittel Fluoreszenzmittel, Stabilisatoren, Feuchtigkeitsfänger, Beschleuniger, Haftvermittler, Vernetzer, Fließverbesserer, Benetzungsmittel, Thixotropierungsmittel, Verdünnungsmittel, Flexibilisierer, polymeren Verdickungsmittel, Flammschutzmittel, Korrosionsinhibitoren, Weichmacher und Tackyfier, allein oder in Kombination miteinander;
jeweils bezogen auf das Gesamtgewicht der Komponenten (A) bis (H).

8. Einkomponentenmasse nach Anspruch 7, **dadurch gekennzeichnet, dass** die Masse aus den Komponenten (A), (B), (C), und wahlweise wenigstens einer der Komponenten (D) und (H) besteht.

9. Einkomponentenmasse nach Anspruch 7, **dadurch gekennzeichnet, dass** die Einkomponentenmasse die mindestens eine strahlungshärtbare Verbindung (F) in einem Anteil von 5 bis 50 Gew.-% und den radikalischen Photoinitiator (G) in einem Anteil von 0,01 bis 5 Gew.-% enthält.

10. Einkomponentenmasse nach einem der vorhergehenden Ansprüche, **dadurch gekennzeichnet, dass** die Masse nach der Aktivierung durch Bestrahlung in weniger als 7 Tagen, bevorzugt 24 h und besonders bevorzugt in höchstens 6 h, aushärtet.

11. Einkomponentenmasse nach einem der vorhergehenden Ansprüche, **dadurch gekennzeichnet, dass** sich die Viskosität der Einkomponentenmasse nach Lagerung über einen Zeitraum von 7 Tagen bei Raumtemperatur um weniger als 100 % ändert, wobei die Viskosität wie in der Beschreibung definiert gemessen wird.

12. Verwendung der Einkomponentenmasse gemäß einem der Ansprüche 1 bis 11 als Klebstoff oder Dichtstoff für das Verkleben, Vergießen, Abformen, Abdichten und Beschichten von Substraten.

13. Verfahren zum Verkleben, Abformen, Abdichten und Beschichten von Substraten unter Verwendung der Einkomponentenmasse gemäß einem der Ansprüche 1 bis 11, umfassend folgende Schritte:
a) Dosieren der Einkomponentenmasse auf ein erstes Substrat;
b) Aktivieren der Einkomponentenmasse durch Bestrahlen mit aktinischer Strahlung einer geeigneten Wellenlänge während eines ausreichend langen Zeitraums, sodass aus dem Säurebildner (B) eine Säure freigesetzt wird;
c) wahlweise Zuführen eines zweiten Substrates zur aktivierten Einkomponentenmasse innerhalb einer Offenzeit unter Bildung eines Substratverbundes; und
d) Einhalten einer Wartezeit bis zum Erreichen einer ersten Festigkeit der Masse auf dem ersten Substrat oder im Substratverbund.

14. Verfahren nach Anspruch 13, **dadurch gekennzeichnet, dass** das Aktivieren der Einkomponentenmasse in einer Durchflussapparatur erfolgt.

## Claims

1. A moisture-curable one-pack composition that can be activated by irradiation with actinic radiation, comprising
one or more moisture-curable compounds (A) selected from the group of alkoxy silanes, the alkoxy silane of component (A) being at least bifunctional with respect to alkoxy silane groups;
at least one acid generator (B) releasing an acid when exposed to actinic radiation; and
at least one carbonyl compound and/or carbonyl derivative (C) selected from the group of aldehydes, ketones, hemiacetals or hemiketals.

2. The one-pack composition according to claim 1, **characterized in that** the one-pack composition cures without the ingress of external moisture after activation of the composition by irradiation.

3. The one-pack composition according to claim 1 or 2, **characterized in that** the at least bifunctional alkoxy silane of component (A) comprises a bifunctional α-alkoxy silane.

4. The one-pack composition according to any one of the preceding claims, **characterized in that** the one-pack composition additionally comprises at least one catalyst (E) for silane crosslinking, preferably an acidic catalyst.

5. The one-pack composition according to any one of the preceding claims, **characterized in that** the one-pack composition additionally comprises at least one radiation-curable compound (F) and at least one radical photoinitiator (G).

6. The one-pack composition according to any one of the preceding claims, **characterized in that** the one-pack composition comprises at least one compound from the group of alcohols and/or thiols (D), preferably an aliphatic alcohol and/or an aliphatic thiol, more preferably a dialcohol and/or a dithiol, particularly preferably 1,2-dialcohols, 1,3-dialcohols, 1,2-dithiols or 1,3-dithiols, and mixtures thereof.

7. The one-pack composition according to any one of the preceding claims, comprising:
(A) at least one moisture-curable compound in a proportion of 10 to 99 wt.%, wherein the moisture-curable compound comprises at least one bifunctional alkoxy silane (A1) and optionally a monofunctional alkoxy silane (A2);
(B) at least one acid generator in a proportion of 0.0001 to 3 wt.%, preferably 0.001 to 1 wt.%;
(C) at least one carbonyl compound and/or carbonyl derivative in a proportion of 0.3 to 15 wt.%;
(D) at least one compound from the group of alcohols and/or thiols in a proportion of 0 to 30 wt.% or preferably 0.1 to 20 wt.%;
(E) at least one catalyst for silane crosslinking in a proportion of 0 to 20 wt.%, preferably 0.1 to 5 wt.%; more preferably in the form of an acidic catalyst;
(F) at least one radiation-curable compound in a proportion of 0 to 50 wt.%, preferably 5 to 50 wt.%;
(G) at least one radical photoinitiator in a proportion of 0 to 5 wt.%, preferably 0.01 to 5 wt.%; and
(H) at least one additive (H) in a proportion of 0 to 70 wt.%; preferably selected from the group of fillers, colorants, pigments, photosensitizers, anti-ageing agents, fluorescent agents, stabilizers, moisture scavengers, accelerators, adhesion promoters, crosslinking agents, flow improvers, wetting agents, thixotropic agents, diluents, flexibilizers, polymeric thickeners, flame retardants, corrosion inhibitors, plasticizers and tackifiers, alone or in combination with each other;
each based on the total weight of components (A) to (H).

8. The one-pack composition according to claim 7, **characterized in that** the composition consists of components (A), (B), (C) and optionally at least one of components (D) and (H).

9. The one-pack composition according to claim 7, **characterized in that** the one-pack composition contains the at least one radiation-curable compound (F) in a proportion of 5 to 50 wt.% and the radical photoinitiator (G) in a proportion of 0.01 to 5 wt.%.

10. The one-pack composition according to any one of the preceding claims, **characterized in that** the composition, after activation by irradiation, cures in less than 7 days, preferably within 24 h and particularly preferably within at most 6 h.

11. The one-pack composition according to any one of the preceding claims, **characterized in that** the viscosity of the one-pack composition changes by less than 100% after a 7-day storage at room temperature, the viscosity being measured as defined in the description.

12. A use of the one-pack composition according to any of claims 1 to 11 as an adhesive or sealant for the bonding, casting, molding, sealing and coating of substrates.

13. A method for the bonding, molding, sealing and coating of substrates using the one-pack composition according to any of claims 1 to 11, comprising the following steps:
a) dosing the one-pack composition onto a first substrate;
b) activating the one-pack composition by irradiation with actinic radiation of a suitable wavelength during a sufficiently long period of time such that an acid is released from the acid generator (B);
c) optionally supplying a second substrate to the activated one-pack composition within an open time while forming a substrate composite; and
d) maintaining a waiting time until a first strength of the composition on the first substrate or in the substrate composite is achieved.

14. The method according to claim 13, **characterized in that** activation of the one-pack composition is performed in a flow apparatus.

## Revendications

1. Masse à un composant durcissable à l'humidité qui est apte à être activée par irradiation avec un rayonnement actinique, comprenant
un ou plusieurs composés (A) durcissables à l'humidité, choisis dans le groupe des alcoxysilanes, l'alcoxysilane du composant (A) étant au moins difonctionnel par rapport à des groupes alcoxysilane ;
au moins un acidifiant (B) qui libère un acide sous l'effet d'un rayonnement actinique, et
au moins un composé carbonyle et/ou un dérivé carbonyle (C) choisi dans le groupe des aldéhydes, des cétones, des hémiacétals ou des hémicétals.

2. Masse à un composant selon la revendication 1, **caractérisée en ce que** la masse à un composant durcit après activation de la masse par irradiation sans apport d'humidité externe.

3. Masse à un composant selon la revendication 1 ou 2, **caractérisée en ce que** l'alcoxysilane au moins difonctionnel du composant (A) comprend un α-alcoxysilane difonctionnel.

4. Masse à un composant selon l'une des revendications précédentes, **caractérisée en ce que** la masse à un composant comprend en outre au moins un catalyseur (E) pour la réticulation au silane, de préférence un catalyseur acide.

5. Masse à un composant selon l'une des revendications précédentes, **caractérisée en ce que** la masse à un composant comprend en outre au moins un composé (F) durcissable par rayonnement et au moins un photoinitiateur radicalaire (G).

6. Masse à un composant selon l'une des revendications précédentes, **caractérisée en ce que** la masse à un composant comprend au moins un composé du groupe des alcools et/ou des thiols (D), de préférence un alcool aliphatique et/ou un thiol aliphatique, plus préférablement un dialcool et/ou un dithiol, de manière particulièrement préférée des 1,2-dialcools, des 1,3-dialcools, des 1,2-dithiols ou des 1,3-dithiols, et leurs mélanges.

7. Masse à un composant selon l'une des revendications précédentes, comprenant :
(A) au moins un composé durcissable à l'humidité dans une proportion de 10 à 99 % en poids, le composé durcissable à l'humidité comprenant au moins un alcoxysilane difonctionnel (A1) et facultativement un alcoxysilane monofonctionnel (A2) ;
(B) au moins un acidifiant dans une proportion de 0,0001 à 3 % en poids, de préférence de 0,001 à 1 % en poids ;
(C) au moins un composé carbonyle et/ou un dérivé carbonyle dans une proportion de 0,3 à 15 % en poids ;
(D) au moins un composé du groupe des alcools et/ou des thiols dans une proportion de 0 à 30 % en poids, ou de préférence de 0,1 à 20 % en poids ;
(E) au moins un catalyseur pour la réticulation au silane dans une proportion de 0 à 20 % en poids, de préférence de 0,1 à 5 % en poids ; plus préférablement sous forme d'un catalyseur acide ;
(F) au moins un composé durcissable par rayonnement dans une proportion de 0 à 50 % en poids, de préférence de 5 à 50 % en poids ;
(G) au moins un photoinitiateur radicalaire dans une proportion de 0 à 5 % en poids, de préférence de 0,01 à 5 % en poids ; et
(H) au moins un additif (H) dans une proportion de 0 à 70 % en poids ; de préférence choisi dans le groupe des matières de charge, des colorants, des pigments, des photosensibilisateurs, des agents de protection contre le vieillissement, des agents fluorescents, des stabilisants, des absorbeurs d'humidité, des accélérateurs, des agents adhésifs, des agents de réticulation, des agents améliorant l'écoulement, des agents mouillants, des agents thixotropiques, des diluants, des agents flexibilisants, des épaississants polymères, des agents ignifuges, des inhibiteurs de corrosion, des plastifiants et des résines tackifiantes, seuls ou en combinaison les uns avec les autres;
respectivement par rapport au poids total des composants (A) à (H).

8. Masse à un composant selon la revendication 7, **caractérisée en ce que** la masse se compose des composants (A), (B), (C) et, facultativement, d'au moins un des composants (D) et (H).

9. Masse à un composant selon la revendication 7, **caractérisée en ce que** la masse à un composant contient ledit au moins un composé durcissable par rayonnement (F) dans une proportion de 5 à 50 % en poids et le photoinitiateur radicalaire (G) dans une proportion de 0,01 à 5 % en poids.

10. Masse à un composant selon l'une des revendications précédentes, **caractérisée en ce que** la masse durcit après activation par irradiation en moins de 7 jours, de préférence en 24 heures et de manière particulièrement préférée en 6 heures au maximum.

11. Masse à un composant selon l'une des revendications précédentes, **caractérisée en ce que** la viscosité de la masse à un composant varie de moins de 100 % après un stockage sur une période de 7 jours à température ambiante, la viscosité étant mesurée comme défini dans la description.

12. Utilisation de la masse à un composant selon l'une des revendications 1 à 11 en tant que matière adhésive ou matière d'étanchéité pour le collage, le coulage, le moulage, l'étanchement et le revêtement de substrats.

13. Procédé pour le collage, le moulage, l'étanchement et le revêtement de substrats en utilisant la masse à un composant selon l'une des revendications 1 à 11, comprenant les étapes suivantes :
a) le dosage de la masse à un composant sur un premier substrat ;
b) l'activation de la masse à un composant par irradiation avec un rayonnement actinique d'une longueur d'onde appropriée pendant une période suffisamment longue de sorte qu'un acide est libéré par l'acidifiant (B);
c) facultativement l'apport d'un deuxième substrat à la masse à un composant activée pendant un temps d'ouverture de manière à former un composite de substrats; et
d) le respect d'un temps d'attente jusqu'à ce que la masse atteint une première résistance sur le premier substrat ou dans le composite de substrats.

14. Procédé selon la revendication 13, **caractérisé en ce que** l'activation de la masse à un composant s'effectue dans un appareil à flux continu.
